# EUROPÄISCHE PATENTANMELDUNG

(11) **EP 0 736 576 A1**
(43) Veröffentlichungstag der Anmeldung: **09.10.1996**
(21) Anmeldenummer: 96104497.1
(22) Anmeldetag: 21.03.1996
(51) Int. Cl.: C09B 67/22, C09B 29/045, D06P 3/54

(54) **Grüne Dispersionsfarbstoffmischungen**

(30) Priorität: 03.04.1995 DE 19512424
(71) Anmelder: BAYER AG, 51368 Leverkusen (DE)
(72) Erfinder: Wanken, Klaus-Wilfried, 51373 Leverkusen (DE); Elsner, Wolf-Dieter, 51399 Burscheid (DE); Krölls, Klaus, 51467 Bergisch Gladbach (DE)

(57) **Zusammenfassung**

Farbstoffmischungen, enthaltend einen blauen Farbstoff der Formel (I) 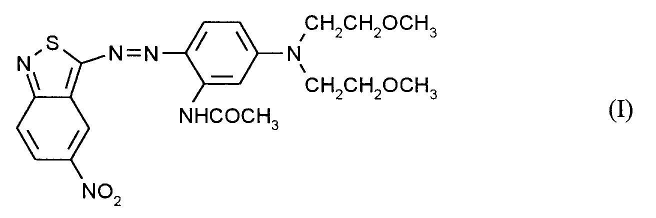 und mindestens einen gelben Farbstoff der Formeln (II) bis (VIII) enthalten 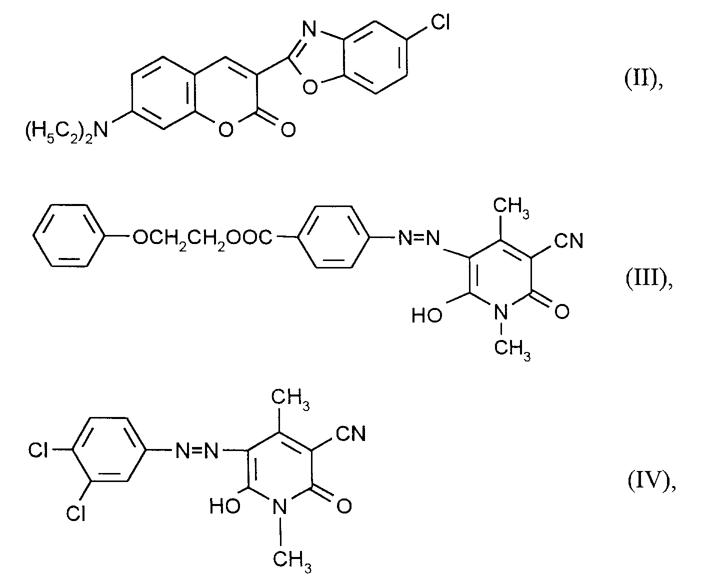 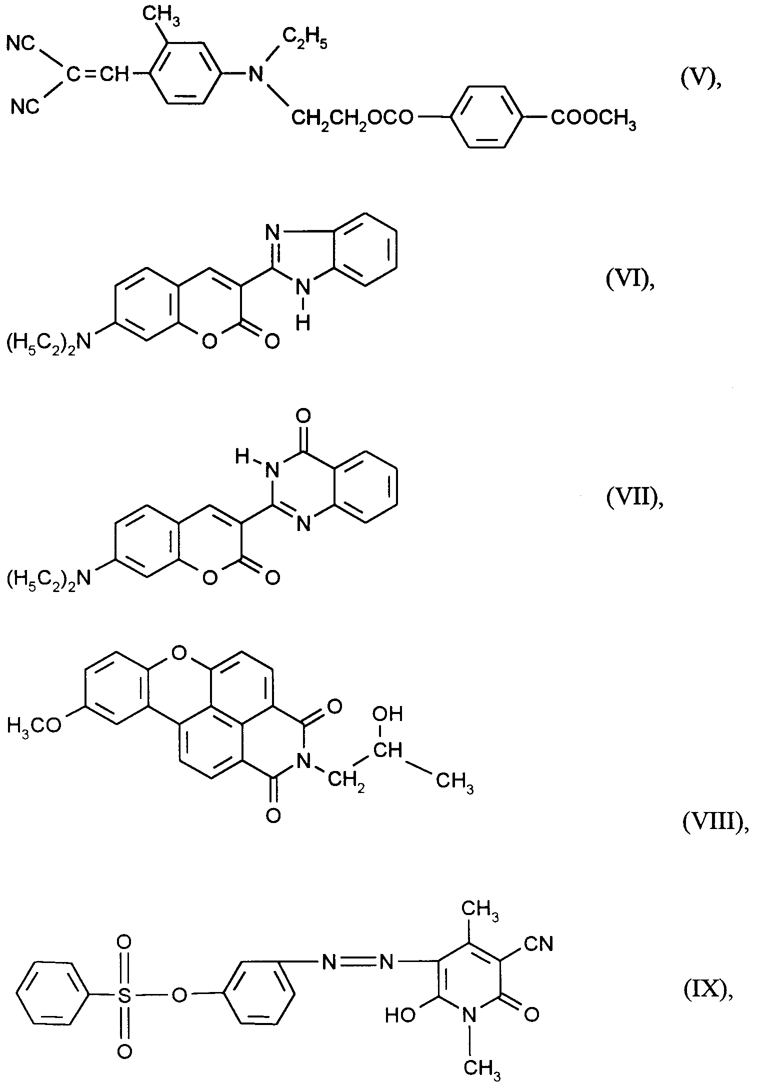 eignen sich besonders gut zum Färben und Bedrucken von hydrophoben synthetischen Fasern in grünen Tönen.

## Beschreibung

Die Erfindung betrifft Mischungen von Dispersionsfarbstoffen, diese enthaltende Präparationen sowie ihre Verwendung zum Färben und Bedrucken von hydrophoben synthetischen Fasern.

Zu den bekannten Vorteilen der Anthrachinonfarbstoffe zählen insbesondere die hohe Lichtechtheit. Andererseits weisen diese Farbstoffe eine Reihe von Nachteilen auf. So besitzen sie beispielsweise eine geringe Farbstärke, was insbesondere bei hohen Farbtiefen eine beträchtliche Kostensteigerung zur Folge hat. Zudem werden bei der Färbung von Mischgeweben aus Polyesterfasern und Wolle, Baumwolle oder Regenerat-Cellulose die Begleitfasern stark angeschmutzt. Diese Anschmutzung läßt sich auch durch eine reduktive Nachbehandlung nicht vollständig entfernen.

Das deutlich geringere Ziehverhalten und Aufbauvermögen erhöht die Gefahr der unegalen Färbung. Weiterhin nachteilig ist die Empfindlichkeit der blauen Anthrachinonfarbstoffe gegenüber Metallionen, insbesondere Kupfer, im Färbebad, weswegen diesem häufig Komplexbildner zugesetzt werden müssen.

Auf dem Markt befindliche grüne Farbstoffmischungen, die als Blaukomponente einen Anthrachinonfarbstoff enthalten, besitzen ebenfalls die beschriebenen Nachteile.

Aufgabe der vorliegenden Erfindung war daher die Bereitstellung vorteilhafter grüner Farbstoffmischungen, die keine Anthrachinonfarbstoffe als Blaukomponente enthalten.

Es wurden nun Mischungen gefunden, die dadurch gekennzeichnet sind, daß sie einen farbstarken blauen Farbstoff der Formel (I) 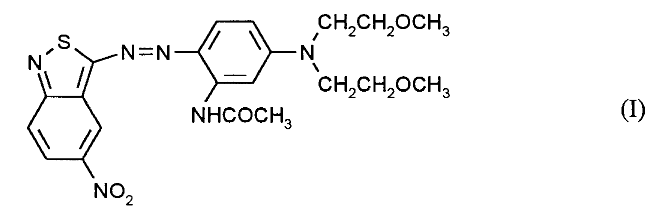 und mindestens einen gelben Farbstoff der Formeln (II) bis (IX) enthalten

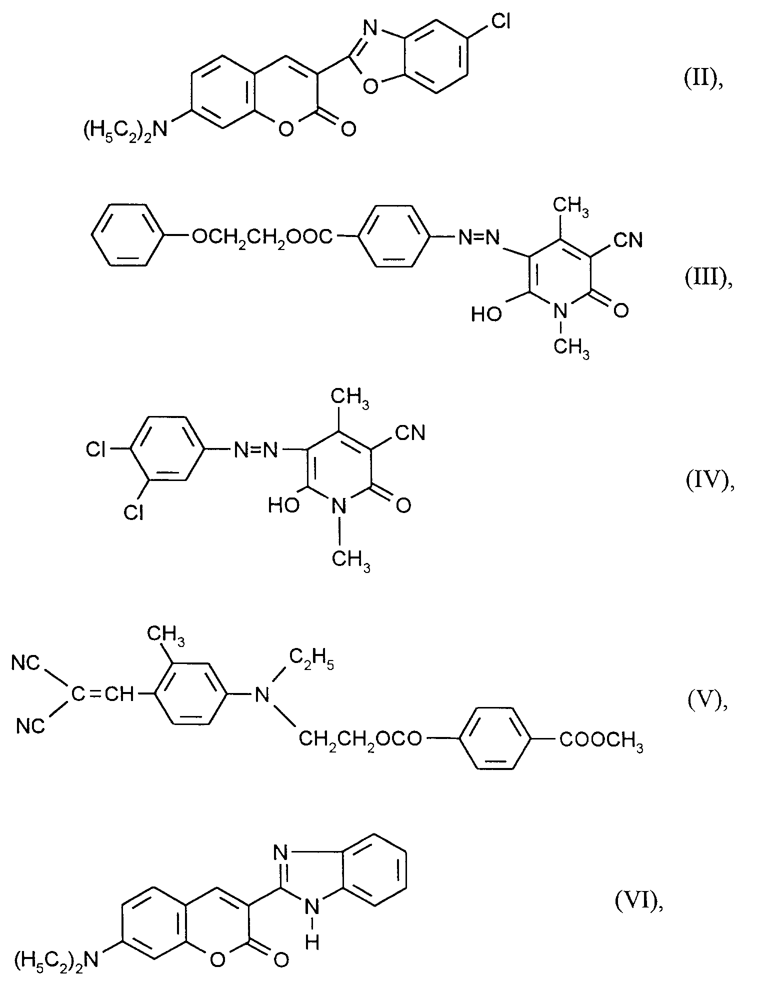

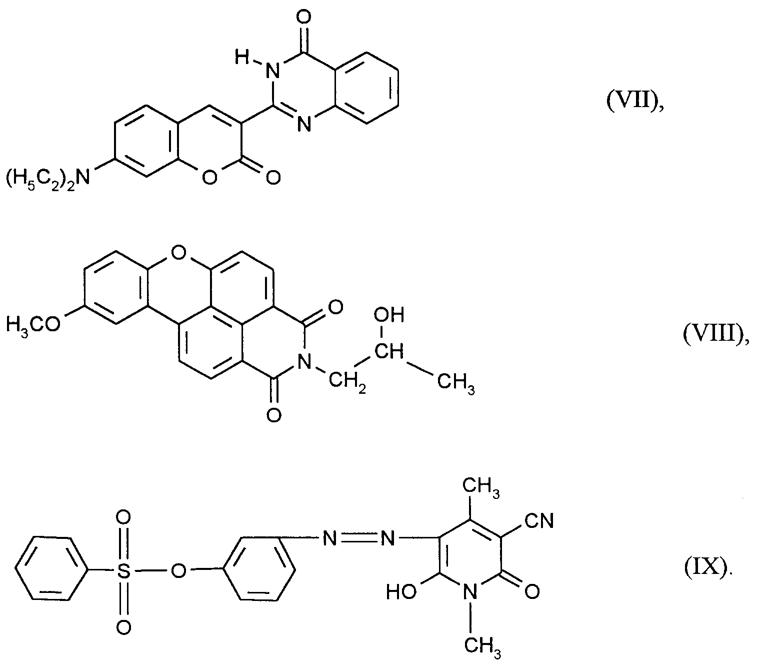

Die den erfindungsgemäßen Farbstoffmischungen zugrundeliegenden Einzelfarbstoffe sind beispielsweise bekannt aus DE-A-34 25 127 (I), DE-A-20 30 507 (II), DE-A-24 14 279 (III), DE-A-31 36 290 (IV) und DE-A-23 08 706 (V).

Mit den erfindungsgemäßen Farbstoffmischungen werden vorteilhafte Grüntöne bereitgestellt, die insbesondere gegenüber Grüntönen, welche ausschließlich einen Anthrachinonfarbstoff als Blaukomponente besitzen, verbesserte Eigenschaften aufweisen. Als anthrachinoide Blaukomponente ist beispielsweise C.I. Disperse Blau 60 oder Disperse Blau 87 zu nennen.

Bevorzugt sind erfindungsgemäße Farbstoffmischungen, die
- 5 bis 95 Gew.-%: des blauen Farbstoffs der Formel (I) und
- 95 bis 5 Gew.-%: mindestens eines gelben Farbstoffs der Formeln (II) bis (IX)
enthalten.

Ganz besonders bevorzugt sind die nachfolgend aufgeführten Farbstoffmischungen.
15 bis 95 Gew.-% des Farbstoffs der Formel (I) und
85 bis 15 Gew.-% des Farbstoffs der Formel (II),
50 bis 95 Gew.-% des Farbstoffs der Formel (I) und
50 bis 5 Gew.-% des Farbstoffs der Formel (III),
55 bis 95 Gew.-% des Farbstoffs der Formel (I) und
45 bis 5 Gew.-% des Farbstoffs der Formel (IV),
30 bis 85 Gew.-% des Farbstoffs der Formel (I) und
70 bis 15 Gew.-% des Farbstoffs der Formel (V),
5 bis 80 Gew.-% des Farbstoffs der Formel (I) und
95 bis 20 Gew.-% des Farbstoffs der Formel (VI),
15 bis 95 Gew.-% des Farbstoffs der Formel (I) und
85 bis 5 Gew.-% des Farbstoffs der Formel (VII),
5 bis 80 Gew.-% des Farbstoffs der Formel (I) und
95 bis 20 Gew.-% des Farbstoffs der Formel (VIII),
5 bis 80 Gew.-% des Farbstoffs der Formel (I) und
95 bis 20 Gew.-% des Farbstoffs der Formel (IX).

Die erfindungsgemäßen Farbstoffmischungen können aber auch noch weitere Farbstoffe in beliebiger Menge, vorzugsweise bis zu 10 %, bezogen auf das Gesamtgewicht der Farbstoffe der Formeln (I) bis (IX) enthalten.

Die Erfindung betrifft weiterhin die Verwendung der erfindungsgemäßen Farbstoffmischungen zum Färben und Bedrucken von hydrophoben synthetischen Fasern, insbesondere von Textilien aus aromatischen Polyestern oder von Mischtextilien aus aromatischen Polyestern und Celluloseestern oder aus aromatischen Polyestern und Wolle. Sie zeichnen sich bei gutem Echtheitsniveau durch einen klaren, brillanten Grünton aus.

Textilmaterialien aus Polyester können mit den erfindungsgemäßen Farbstoffmischungen nach Art einer Spinnfärbung gefärbt werden, bevorzugt jedoch aus wäßriger Suspension. Hierzu werden die Farbstoffe auf allgemein bekannte Weise zu Färbepräparaten verarbeitet, z.B. durch Mahlen in Wasser in Gegenwart von Dispergier- und/oder Füllmitteln. Mit den gegebenenfalls im Vakuum oder durch Zerstäuben getrockneten Präparaten kann man nach Zugabe von Wasser in sogenannter kurzer oder langer Flotte färben, klotzen oder bedrucken.

Die Erfindung betrifft weiterhin Farbstoffpräparationen, die im allgemeinen enthalten:
- 10-60 Gew.-%: erfindungsgemäße Farbstoffmischung,
- 10-80 Gew.-%: anionisches Dispergiermittel,
- 0 bis 15 Gew.-%: nichtionogenes Dispergiermittel und gegebenenfalls weitere Zusätze wie Netzmittel, Entschäumer, Entstaubungsmittel sowie weitere Hilfsmittel.

Die erfindungsgemäßen Farbstoffmischungen bzw. diese enthaltende Farbstoffpräparationen können nach verschiedenen Verfahren hergestellt werden, beispielsweise durch:
a) Mischen der separat hergestellten und (separat) formierten Einzelfarbstoffe, oder
b) gemeinsame Formierung der separat hergestellten Einzelfarbstoffe.

Unter dem Begriff "Formieren" wird die Überführung eines in der Regel aus einem Herstellungsverfahren gewonnenen Farbstoffes in eine für die jeweils vorgesehene Anwendung gebräuchliche Form verstanden. Insbesondere wird darunter die Naßperlmahlung des Farbstoffes in Gegenwart von Wasser, Dispergator und gegebenenfalls weiterer Zusätze und gegebenenfalls anschließender Trocknung, insbesondere Sprühtrocknung, verstanden.

Das Mischen der Farbstoffe erfolgt zweckmäßigerweise in geeigneten Mühlen, beispielsweise Kugel- oder Sandmühlen. Einzeln formierte Farbstoffe können aber auch durch Einrühren in Färbeflotten gemischt werden. Zur Herstellung bzw. Verbesserung des Dispersionsgrades von Einzelfarbstoffen oder Mischungen wird der zu mahlenden Farbstoffmischung oder der Reaktionsmischung vorzugsweise ein oder mehrere Dispergiermittel zugesetzt. Selbstverständlich kann die Teilchengröße der Farbstoffpartikel durch eine Mahlbehandlung z.B. Naßperlmahlung, sei es während der Synthese oder im Anschluß daran, entsprechend beeinflußt und auf einen gewünschten Wert eingestellt werden. Als Dispergiermittel zur Formierung der erfindungsgemäßen Farbstoffmischungen kommen insbesondere anionische und/oder nichtionogene in Frage. Bevorzugt sind dabei die anionischen Dispergiermittel und besonders bevorzugt ist eine Farbstoffmischung aus anionischen und nichtionogenen Dispergiermitteln.

Geeignete anionische Dispergiermittel sind insbesondere Kondensationsprodukte von aromatischen Sulfonsäuren mit Formaldehyd, wie Kondensationsprodukte aus Formaldehyd und Alkylnaphthalinsulfonsäuren oder aus Formaldehyd, Naphthalinsulfonsäuren und Benzolsulfonsäuren, Kondensationsprodukte aus gegebenenfalls substituiertem Phenol mit Formaldehyd und Natriumbisulfit. Weiterhin kommen vor allem Ligninsulfonate in Betracht, z.B. solche, die nach dem Sulfit-oder Kraft-Verfahren gewonnen werden. Vorzugsweise handelt es sich um Produkte die zum Teil hydrolysiert, oxidiert, propoxyliert, sulfoniert, sulfomethyliert oder desulfoniert und nach bekannten Verfahren fraktioniert werden, z.B. nach dem Molekulargewicht oder nach dem Sulfonierungsgrad. Auch Mischungen aus Sulfit-und Kraftligninsulfonaten sind gut wirksam. Besonders geeignet sind Ligninsulfonate mit einem durchschnittlichen Molekulargewicht zwischen 1 000 und 100 000, einem Gehalt an aktivem Ligninsulfonat von mindestens 80 % und vorzugsweise mit niedrigem Gehalt an mehrwertigen Kationen. Der Sulfonierungsgrad kann in weiten Grenzen variieren.

Als nichtionische Dispergiermittel kommen beispielsweise in Frage: Umsetzungsprodukte von Alkylenoxiden mit alkylierbaren Verbindungen, wie z.B. Fettalkoholen, Fettaminen, Fettsäuren, Phenolen, Alkylphenolen, Arylalkylphenolen, Carbonsäureamiden und Harzsäuren. Hierbei handelt es sich z.B. um Ethylenoxidaddukte aus der Klasse der Umsetzungsprodukte von Ethylenoxid mit:
a) gesättigten und/oder ungesättigten Fettalkoholen mit 6 bis 20 C-Atomen oder
b) Alkylphenolen mit 4 bis 12 C-Atomen im Alkylrest oder
c) gesättigten und/oder ungesättigten Fettaminen mit 14 bis 20 C-Atomen oder
d) gesättigten und/oder ungesättigten Fettsäuren mit 14 bis 20 C-Atomen oder
e) hydrierte und/oder unhydrierte Harzsäuren.

Als Ethylenoxid-Addukte kommen insbesondere die unter a) bis e) genannten alkylierbaren Verbindungen mit 5 bis 30 Mol Ethylenoxid in Frage.

Geeignete Netzmittel sind beispielsweise C₆-C₁₀-Alkyl-Phosphate oder Additionsprodukte aus C₆-C₁₈-Fettalkoholen und Ethylen- und/oder Propylenoxid oder Gemische solcher Alkoxylierungsprodukte.

Geeignete Entschäumer sind beispielsweise Tributylphosphat oder Tertiär-Acetylen-Glykol.

Geeignete Entstaubungsmittel sind beispielsweise solche auf Mineralölbasis.

Unter weiteren Hilfsmitteln werden beispielsweise Fungizide, Antrocknungsverhinderer usw. verstanden.

Bevorzugte feste Farbstoffpräparationen enthalten
- 10 bis 50 Gew.-%: erfindungsgemäße Farbstoffmischung,
- 10 bis 80 Gew.-%: Ligninsulfonate, insbesondere Kraft- und Sulfitlignine,
- 0 bis 20 Gew.-%: eines Kondensationsproduktes aus Naphthalinsulfonsäure und Formaldehyd,
- 0 bis 10 Gew.-%: nichtionogenes Dispergiermittel, insbesondere Additionsprodukte von Harzsäuren und Ethylenoxid und/oder Propylenoxid,
- 0 bis 1,5 Gew.-%: Netzmittel,
- 0,1 bis 1 Gew.-%: Entschäumer, und
- 0,2 bis 1,5 Gew.-%: Entstaubungsmittel,
jeweils bezogen auf die gesamte Präparation.

Bevorzugte flüssige Farbstoffpräparationen enthalten
- 10 bis 30 Gew.-%: erfindungsgemäße Farbstoffmischung,
- 10 bis 30 Gew.-%: Ligninsulfonate, insbesondere Kraft- und Sulfitlignine,
- 0 bis 10 Gew.-%: eines Kondensationsproduktes aus Naphthalinsulfonsäure und Formaldehyd,
- 0 bis 10 Gew.-%: nichtionogenes Dispergiermittel, insbesondere Additionsprodukte von Harzsäuren und Ethylenoxid und/oder Propylenoxid,
- 0,1 bis 1 Gew.-%: Entschäumer,
- 0,1 bis 0,5 Gew.-%: Konservierungsmittel,
- 0 bis 15 Gew.-%: Kälteschutzmittel, insbesondere Glycerin und
- 79,8 bis 10 Gew.-%: Wasser
jeweils bezogen auf die gesamte Präparation.

Als Konservierungsmittel kommen beispielsweise folgende in Frage: Isothiazolidone, beispielsweise 1,2-Benzisothiazol-3-(2H)-on, Chlor-2-methyl-4-isothiazolin-3-on oder 2-Methyl-4-isothiazolin-3-on, Pentachlorphenolnatrium, 1,3,5-Triethylolhexahydro-s-triazin oder Gemische davon.

Das Färben des genannten Fasergutes mit den erfindungsgemäßen Farbstoffmischungen sowie den jeweiligen Farbstoffpräparationen erfolgt in an sich bekannter Weise, vorzugsweise aus wäßriger Suspension, gegebenenfalls in Gegenwart von Carriern im allgemeinen bei 80 bis 110°C nach dem Ausziehverfahren oder nach dem HT-Verfahren im Färbeautoklav bei 110 bis 140°C. Man erhält auf diese Weise sehr farbstarke grüne Färbungen mit sehr guten Echtheitseigenschaften. In den bei den obigen Applikationen eingesetzten Färbeflotten sollten die erfindungsgemäßen Präparationen der Farbstoffmischungen vorzugsweise in möglichst feiner Verteilung vorliegen. Die Feinverteilung der Farbstoffe wird dadurch gewährleistet, daß man die Einzelfarbstoffe bzw. die Farbstoffmischungen zusammen mit Dispergiermitteln in einem flüssigen Medium, vorzugsweise in Wasser, aufschlämmt und die Farbstoffmischung der Einwirkung von Scherkräften aussetzt, wobei die ursprünglich vorhandenen Farbstoffteilchen mechanisch soweit zerkleinert werden, daß eine optimale spezifische Oberfläche erreicht wird und die Sedimentation des Farbstoffs vermieden wird. Die Teilchengröße der Farbstoffe liegt im allgemeinen zwischen 0,1 und 5 µm, vorzugsweise zwischen 0,5-1 µm. Die bei dem Mahlvorgang mitverwendeten Dispergiermittel können die bereits im Zusammenhang mit der Synthese und der Herstellung der Farbstoffmischung genannten nichtionischen oder anionischen Dispergiermittel sein.

Für die meisten Anwendungsbereiche werden feste Präparationen (Pulver-bzw. Granulatpräparationen) bevorzugt.

Ein bevorzugtes Herstellungsverfahren für feste Farbstoffzubereitungen besteht darin, daß den oben beschriebenen flüssigen Farbstoffdispersionen die Flüssigkeit, insbesondere das Wasser, entzogen wird, z.B. durch Vakuumtrockuung, Gefriertrocknung, durch Trocknung auf Walzentrocknern, vorzugsweise aber durch Sprühtrocknung.

Zur Herstellung der erfindungsgemäßen Farbstoffmischungen in feinverteilter Form kann folgendermaßen vorgegangen werden: beispielsweise werden 10 bis 50 Teile einer Farbstoffmischung mit 10 bis 80 Teilen Ligninsulfonat, 0 bis 20 Teilen Kondensationsprodukt aus Naphthalinsulfonsäuren und Formaldehyd, 10 bis 0 Teilen nichtionogenes Dispergiermittel, 0 bis 1,5 Teilen Netzmittel, 0,1 bis 1,0 Teilen Entschäumer, 0,2 bis 1,5 Teilen Entstaubungsmittel in einer Perlmühle mit soviel Wasser gemahlen, daß die Dispersion einen Feststoffgehalt von 5 bis 60 % aufweist. (Teile = Gewichtsteile).

Bei der Herstellung der festen Farbstoffpräparationen, kann vor der Trocknung noch ein Entstaubungsmittel, vorzugsweise in einer Menge von 0,1 bis 1,5 Teilen, der zu versprühenden Suspension zugegeben werden.

In gewissen Fällen kann es vorteilhaft sein, den erfindungsgemäßen Farbstoffmischungen als weitere Blaukomponente ein Anthrachinonfarbstoff, insbesondere C.I. Disperse Blau 60 oder C.I. Disperse Blau 87 zuzumischen.

Insbesondere beim Textildruck wird bei Verwendung derartiger Mischungen eine sehr gute Farbtonstabilität festgestellt.

In den nachfolgenden Beispielen bedeuten Teile "Gewichtsteile" und Prozente "Gewichtsprozente", sofern nicht anders angegeben.

### Beispiel 1

Durch Perlmahlung und anschließende Sprühtrocknung wurde eine Farbstoffmischung aus
20,0 Teilen des Farbstoffs der Formel (I),
13,0 Teilen des Farbstoffs der Formel (II),
50,0 Teilen eines handelsüblichen Ligninsulfonates,
8,0 Teilen eines handelsüblichen Dispergiermittels (auf Basis eines Kondensationsproduktes aus Naphthalinsulfonsäure und Formaldehyd),
0,2 Teilen eines handelsüblichen Netzmittels (Alkyl-Phosphat),
0,5 Teilen eines handelsüblichen Entstaubungsmittels auf Mineralölbasis und
8,3 Teilen Restfeuchte
hergestellt.

### Färbebeispiel 1

In einem Färbebad, das mit Natriumphosphat und Essigsäure auf einen pH-Wert von 4,5 gestellt worden ist, wurden 100 Teile eines Polyestergewebes (Polyethylenterephthalat) 30 Minuten lang bei 130°C mit 0,55 Teilen der oben beschriebenen Farbstoffmischung (Flottenverhältnis 1:10) gefärbt. Man erhielt eine klare, brillante Grünfärbung mit ausgezeichneten Echtheiten.

### Färbebeispiel 2

Es wurde analog Färbebeispiel 1 verfahren, jedoch wurde die eingesetzte Menge an Farbstoffmischung aus Beispiel 1 von 0,6 bis 1,0 Teile pro 100 Teile Polyestergewebe variiert. Man erhielt auch hier klare, brillante Grünfärbungen unterschiedlicher Farbtiefe, mit ebenfalls ausgezeichneten Echtheiten.

### Beispiel 2

Es wurden zwei separat hergestellte und separat formierte Einzelfarbstoffe der Formel (I) und (II) in Form ihrer Einzelfarbstoffpräparationen gemischt; 94 Teile einer Farbstoffpräparation enthaltend 31 Gew.-% des Farbstoffs der Formel (I), 58 Gew.-% Dispergator, Stellmittel und 11 Gew.-% sonstige Zusätze.

6 Teile einer Farbstoffpräparation enthaltend 39 Gew.-% des Farbstoffs der Formel (II), 39 Gew.-% Dispergator, 12 Gew.-% Stellmittel und 10 Gew.-% sonstige Zusätze.

### Färbebeispiel 3

Verfuhr man analog Färbebeispiel 1, verwendete jedoch 0,8 Teile der Farbstoffmischung aus Beispiel 2 pro 100 Teile Polyestergewebe, so erhielt man eine brillante Grünfärbung mit hervorragenden Echtheiten.

Die folgende Tabelle enthält weitere Mischungsbeispiele.

| Beispiel | Farbstoff | (I) | (III) | (IV) | (V) | (VI) | (VII) | (VIII) |
|---|---|---|---|---|---|---|---|---|
| 3 | Teile | 67,30 | 32,7 | | | | | |
| 4 | Teile | 72,55 | | 27,45 | | | | |
| 5 | Teile | 58,33 | | | 41,67 | | | |
| 6 | Teile | 17,24 | | | | 82,76 | | |
| 7 | Teile | 37,31 | | | | | 62,69 | |
| 8 | Teile | 17,24 | | | | | | 82,76 |

### Färbebeispiele 4 bis 9:

Verfuhr man analog Färbebeispiel 1, setzte jedoch anstelle der 0,55 g der Farbstoffmischung aus Beispiel 1, jeweils 1,0 g der in den Beispielen 3-8 angegebenen Mischungen ein, so erhielt man ebenfalls, klare, brillante Grünfärbungen mit den aufgeführten Vorzügen.

## Patentansprüche

1. Farbstoffmischungen dadurch gekennzeichnet, daß sie einen blauen Farbstoff der Formel (I) 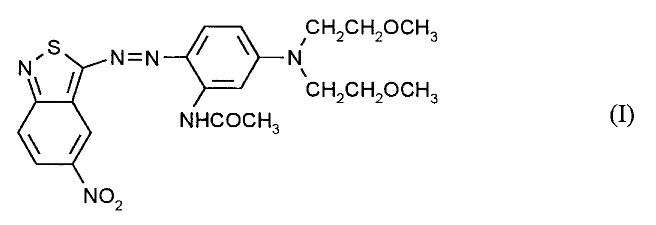 und mindestens einen gelben Farbstoff der Formeln (II) bis (VIII) enthalten

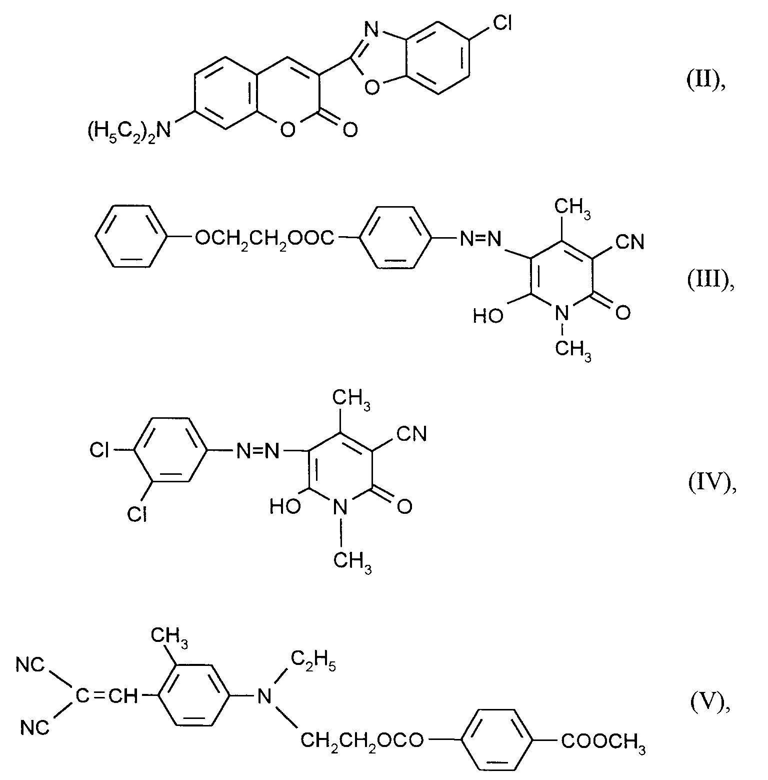

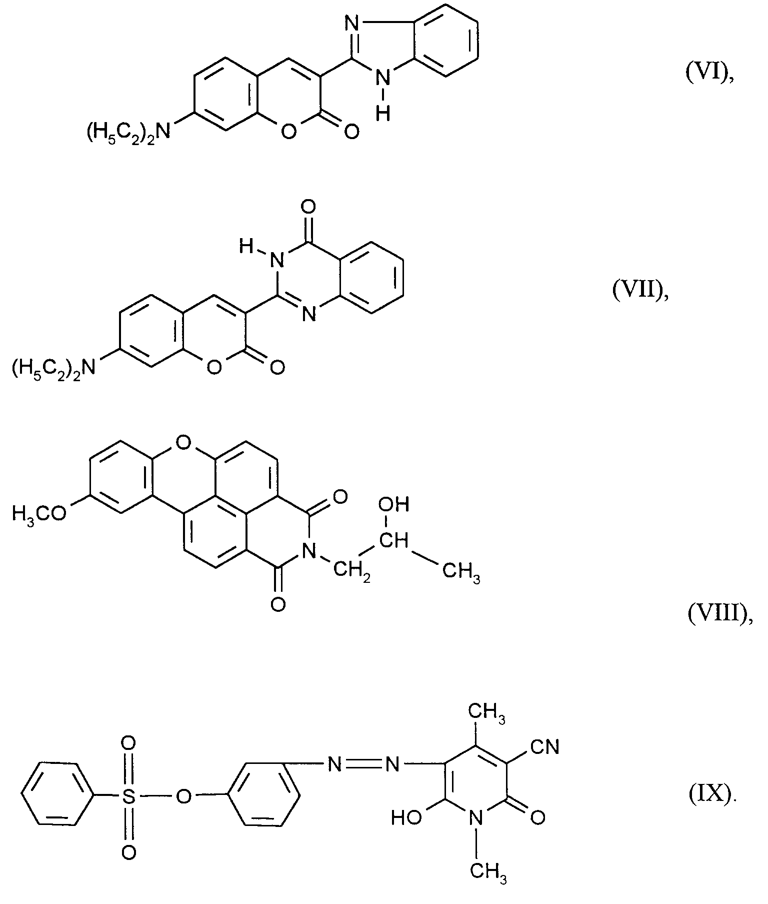

2. Farbstoffmischungen, gemäß Anspruch 1, dadurch gekennzeichnet, daß sie
5 bis 95 Gew.-% des blauen Farbstoffs der Formel (I) und
95 bis 5 Gew.-% mindestens eines gelben Farbstoffs der Formeln (II) bis (IX) enthalten.

3. Farbstoffmischungen nach Anspruch 1, dadurch gekennzeichnet, daß sie einen Farbstoff der Formel (I) und einen Farbstoff der Formel (II) enthalten.

4. Farbstoffpräparationen enthaltend
10-60 Gew.-% Farbstoffmischung gemäß Anspruch 1,
10-80 Gew.-% anionisches Dispergiermittel,
0 bis 15 Gew.-% nichtionogenes Dispergiermittel und gegebenenfalls weitere Zusätze wie Netzmittel, Entschäumer, Entstaubungsmittel sowie weitere Hilfsmittel.

5. Farbstoffpräparationen, gemäß Anspruch 4, dadurch gekennzeichnet, daß sie fest sind und
10 bis 50 Gew.-% Farbstoffmischung gemäß Anspruch 1
10 bis 80 Gew.-% Ligninsulfonate insbesondere Kraft- und Sulfitlignine
0 bis 20 Gew.-% eines Kondensationsproduktes aus Naphthalinsulfonsäure und Formaldehyd,
0 bis 10 Gew.-% nichtionogenes Dispergiermittel, insbesondere Additionsprodukte von Harzsäuren und Ethylenoxid und/oder Propylenoxid,
0 bis 1,5 Gew.-% Netzmittel,
0,1 bis 1 Gew.-% Entschäumer, und
0,2 bis 1,5 Gew.-% Enstaubungsmittel,
jeweils bezogen auf die gesamte Präparation enthalten.

6. Verfahren zur Herstellung der Farbstoffpräparationen gemäß Anspruch 4, durch:
a) Mischen der separat hergestellten und formierten Einzelfarbstoffe, oder
b) gemeinsame Formierung der separat hergestellten Einzelfarbstoffe.

7. Verwendung der Farbstoffmischungen gemäß Anspruch 1 zum Färben und Bedrucken von hydrophoben synthetischen Fasern, insbesondere von Textilien aus aromatischen Polyestern oder von Mischtextilien aus aromatischen Polyestern und Celluloseestern oder aus aromatischen Polyestern und Wolle.
